# EUROPEAN PATENT SPECIFICATION

(11) **EP 3 428 677 B1**
(45) Date of publication and mention of the grant of the patent: **03.11.2021**
(21) Application number: 17181435.3
(22) Date of filing: 14.07.2017
(51) Int. Cl.: G01S 17/931, G01S 7/481

(54) **A VISION SYSTEM AND A VISION METHOD FOR A VEHICLE**
SICHTSYSTEM UND SICHTVERFAHREN FÜR EIN FAHRZEUG
SYSTÈME ET PROCÉDÉ DE VISION POUR VÉHICULE

(43) Date of publication of application: 16.01.2019
(73) Proprietor: Veoneer Sweden AB, 447 83 Vårgårda (SE); Beamagine S.L., 08755 Castellbisbal (ES)
(72) Inventor: ROYO, Santiago, 08755 Castellbisbal (ES); RIU, Jordi, 08660 Balsareny (ES); RODRIGO, Noel, 25005 Lleida (ES); KÄLLHAMMER, Jan-Erik, 582 46 Linköping (SE); SANABRIA, Ferran, 08912 Badalona (ES)
(74) Representative: Müller Verweyen

(56) References cited:
- DE-A1-102005 049 471
- US-A1- 2015 378 023
- US-A1- 2017 026 633

## Description

The invention relates to a lidar vision system for a vehicle according to claim 1. The invention further relates to a corresponding vision method for a vehicle.

Such systems are generally known, for example from WO 2012 123809 A1 and WO 2014 125153 A1. Herein, a surface is illuminated by a light beam that originates from a light source and is reflected by the surface. The reflected light beam is incident on a light deflection device where it is deflected in a specific manner to either a light sensing device or to an absorber. The time-of-flight of the light beam is indicative of the distance between the system and a point on the surface, which spatial location is derivable from information on the light deflection device and by the time-of-flight. The presence of an absorber yields a reliable reduction of noise by light scattering that disturbs the light sensing device's function. However, the presence of an absorber also means that information which is carried by the light incident on the absorber is lost. The system with the light sensing device, the corresponding light deflection device, and a lens system performs scanning of the surface in a fashion that needs to be improved with regard to the measurement frequency, to the measurement domain, and to the use of light incident on the deflection device.

US 2015/0378023 A1 discloses a system and method for scanning a surface and a computer program implementing the method.

DE 10 2005 049 471 A1 discloses a distance sensor with single area scanning in which the distance is measured according to the time-of-flight principle of electromagnetic pulses.

US 2017/0026633A1 discloses a method for performing high dynamic range optical image detection of a scene.

The object of the invention is to provide a vision system and a vision method for a vehicle making more efficient use of the information comprised in the light incident on the deflection device.

The invention solves this problem with the features of the independent claims. The system according to the present invention comprises a detecting device arranged to sense light redirected from the light deflection device in the second deflection direction; and the data processing unit is adapted to process the data provided by the light sensing device and by the detecting device in a combined manner. According to the invention, a 3D measurement, preferably a LIDAR measurement, is combined with an imaging technique, for example RGB imaging, to deliver for example combined RGB plus depth images. In other words, a number of different imaging modalities are combined according to the invention, which could include depth sensing, RGB imaging, imaging in other wavelength, and/or polarimetric imaging as examples.

The detecting device in addition to the light sensing device allows an improved data acquisition. Light that enters the vision system and that is not directed to the light sensing device is not dumped like in the prior art, where the corresponding information is destroyed in the dump element, but recorded by the detection device to gain additional information on the vehicle environment. The additional detecting device delivers information to the data processing unit that is complementary to the data by the light sensing device. The information in the depth, RGB, polarimetric imaging, or some other imaging approach shall be combined in a subsequent processing step by means of an adequate image processing and merging approach, either by software, firmware or hardware.

The processing of data provided by the light sensing device and by the detecting device by the data processing unit in a combined manner allows improved handling of the processed data, e.g., the results of the combined data can be used to control a driver assistance device and/or to control the vision system itself, for example to optimize the measurement frequency and/or the measurement domain.

The invention is applicable to any kind of vehicles, in particular motor vehicles and non-motorized vehicles, like cars, drones, boats, trains, airplanes and so on.

According to the invention, the light source, the light sensing device and the data processing unit form a LIDAR system adapted to measure time-of-flight values. The time-of-flight is the runtime of the light beam and/or a portion of a light beam from the light source via reflection by the scanned surface in the vehicle's environment, until sensing by the light sensing device in the vision system. The time-of-flight corresponds to the distance between the vision system and the scanned surface, which is estimated or computed by the data processing unit.

By an appropriate scanning technique, preferably realized by the deflection device and/or at least one MEMS device that directs the emitted light beam to the scanned surface, the environment can be scanned. The spatial resolution depends on the number of deflection elements comprised in the deflection device, the laser repetition rate, and on the number of light sensors comprised in the light sensing element. The measurement of the time-of-flight values can acquire depth information on a z-axis in addition to x- and y-coordinates given by the scanning procedure. In a preferred embodiment wherein the light source is a laser, the vision system comprises a LIDAR system. This embodiment improves known LIDAR techniques in that it adds additional information from the detection device to the optical processing by the data processing unit. Preferably, the detecting device comprises one or more CCD/CMOS sensors or arrays thereof, which can be used, as an instance, for RGB imaging, for polarimetric imaging, or for any other imaging approach. The vision system preferably is able to simultaneously capture time-of-flight data with the sensing device and image data with the detecting device.

Preferably, the vision system is adapted to choose a region of interest within the vehicle's environment, wherein the resolution of the measurement of the time-of-flight values is increased. Advantageously, the data processing unit is adapted to detect and/or classify objects, e.g., vehicles, humans, animals, and/or traffic signs, based on the data by the light detecting device. More advantageously, the data processing unit is adapted to choose a region of interest wherein the resolution of the time-of-flight measurements is considered to be crucial for the operation of the driver assistance device, such that the measurement resolution can be adapted according to the detected and/or classified object. The region of interest can be a connected area or a set of disconnected areas depending on the number and position of detected and/or classified objects. The resolution refers to the sampling rate and/or to the spatial resolution.

By adjusting the operation of the deflecting device in the region of interest, areas comprised in the field of view are analyzed. For example, said areas of interest could be sampled with a larger rate and the remaining area in the field of view could be sampled with a lower rate, leaving the overall sampling rate constant. Also the spatial resolution in the region of interest can be sampled with a spatial resolution greater than the spatial resolution in the remaining field of view, e.g., by leaving a defined set of deflection elements unused when sampling the remaining field of view but using more and/or all deflection elements corresponding to the region of interest. For example, if a static object far away is detected, like a sign or a tree, the resolution of the area comprising the static object can be less than the resolution of an area that comprises a moving object nearby, like another vehicle or a pedestrian.

This embodiment may comprise an approach to select some region of interest in the image to improve the spatial resolution of the time-of-flight values where it is required, only. This would enable superior spatial resolution at large frame rates by adjusting the deflection elements in the deflection device to analyze areas where relevant information lies. For example, depth images could be sampled with at least 10 frames per second (fps), preferably at least 15 fps, more preferably at least 20 fps, most preferably at least 25 fps, for example 30 fps, and/or RGB/polarimetric/Focal Plane Array (FPA) or other types of images could be sampled with at least 10 fps, preferably at least 15 fps, more preferably at least 20 fps, most preferably at least 25 fps, for example 30 fps. The sampling rates may not be fixed, but can be adjustable, depending for example on the data, the size of the region of interest, and/or further information on e.g. speed, driving direction, objects in the field of view, etc. Such processing could be performed in a delayed process, and not in real time, or instantaneously depending on the purpose of the vision system.

Advantageously, the light sensing device and the detecting device record complementary data from the vehicle's environment. A vision system wherein the prior art absorber is substituted with a detecting device enables the recording of complementary area information of the scanned surface, which later on may be combined with the data from the light sensing device. Preferably, complementary information in the field of view is acquired by the light sensing device to derive the distance of points on the scanned surface and by the detection unit to record images of the environment, considering polarimetric and RGB images as typical, non-limiting examples. These complementary data are combined by data fusion in the data processing unit.

The detecting device can comprise CCD/CMOS units to record images with large resolution and frame rate. The light sensing device can estimate the spatial form of the environment. Other kinds of complementary data could also be recorded, e.g., the light sensing device and the detecting device could record data in different spectral bands and/or of different polarization. The combination of information from several units of the combined imaging modalities can be used to further investigate complete information, at different resolutions, of the surroundings of a vehicle.

In a preferred embodiment the data processing unit is adapted to perform field of view matching mechanisms based on said data. Also optical field of view matching, for example zooming, could be included. Field of view matching between the scanned field received by the light sensing device or multiple light sensing devices and by the detection device can be implemented using additional optical systems being passive or active.

Preferably, the data processing unit is adapted to perform superposition and/or interpolation of the data provided by the light sensing device and by the detecting device. The image data provided by the light sensing device and by the detecting device may be instantly combined by software, firmware and/or electronics to create an image with superimposed depth information, or for extracting combined navigation parameters involving spatial, polarimetric and/or depth information. Interpolation algorithms may be required, as the resolution of the light sensor and detecting device can be different.

Also different regions within the field of view can be sampled at different rates and/or with different resolution. The superposition of the data provided by the light sensing device and by the detecting device could be performed at different frame rates, depending on the dynamics of the effect to be analyzed, and/or could be performed to optimize the performance and/or occupancy of the system.

Advantageously, the data processing unit is adapted to control the deflection device on the basis of information from the detecting device and/or light sensing device. For example, the spatial or temporal resolution can be adapted to allow advantageous sampling.

In a preferred embodiment, the detecting device is adapted to perform imaging in combination with information on the configuration of the deflection device. The detecting device can comprise a single sensor only and/or can comprise an array of sensors being linear, rectangular, and/or of any other shape. The information on the deflection device, preferably on the deflection elements in the deflection device, allows a reconstruction of an image with a resolution that depends on the number of deflection elements and the number of sensors in the detecting device. For example, if the detecting device comprises a single pixel only, the deflection elements are adapted to sequentially raster the scanned surface and redirect portions of light towards the detecting device, thus creating an image with the resolution equal to the number of deflection elements. If the detection device comprises a plurality of pixels, the deflection device is adapted to direct portions of light simultaneously to individual pixels. However, in the limit when all deflection elements deflect light towards the detecting device, the detecting device alone determines the resolution.

Preferably the detecting device comprises a plurality of sections or elements adapted to measure different properties of incident light. The plurality of sections in the detecting device can be of a different kind and/or directed towards different directions. Different detecting sections or elements can be used to measure different light properties, e.g., different intensities, different polarizations and/or different spectral bands. In this embodiment, the light portion directed in the second deflection direction can be divided optically by a beam splitter, or any other optical means, like for instance prisms or micro-lens arrays, to be directed towards the different detecting sections or elements.

The sensors comprised in the light sensing device and detecting elements or sections comprised in the detecting device could be of the same type.

Filters could allow for different measurements of properties of the incident light. A combination of optical systems, comprising lenses, prisms, mirrors and/or filter, etc., for light path division or splitting and/or deflection may be preferably connected to the plurality of detecting elements or sections to acquire images in certain spectral bands, for given incident polarizations, and/or for combining different imaging, time-of-flight measurements and/or other data acquisition techniques.

Advantageously, the detecting elements or sections are adapted to acquire image data in different spectral bands and/or with different imaging techniques. An imaging device comprising a plurality of detecting elements is particularly advantageous if light in different spectral bands or with different polarizations is to be recorded and/or if different imaging techniques are to be applied. The detecting device can comprise a CCD/CMOS sensor or other types of FPA sensors, including arrays of any type of photo diodes, or any area sensors. Arrays of the aforementioned sensors are also included and can comprise line arrays or matrices.

Preferably, the vision system is adapted to perform polarimetric imaging. Polarimetric imaging and/or data acquisition can enhance the performance of LIDAR imaging and/or can be used to deal with bad weather conditions such as fog, rain, dust, and/or snow. Preferably, the detecting device comprises a polarimeter to measure the degree of depolarization of the laser beam and/or to use polarimetric information to interrogate complementary information from the scanned surface. Polarimetric information could for example be acquired with a common detecting device together with at least one polarization filter. In particular, but not limited to, the road condition, the intensity of fog, rain, dust, and/or snow and/or the relevance thereof to the LIDAR could be extracted or estimated from this information.

LIDAR, RGB, and/or polarimetric information are adapted to be combined by the data processing unit before, during and/or after interpolation and superposition. For the polarimetric measurements, computational methods to interpolate the degree of polarization, or the polarization direction, could be used to obtain a distribution of depolarization, or a measurement of the amount of depolarization, which could be combined in an image with the LIDAR sensor, or separately used in the vision system, for example to estimate the state of the road or the density of fog or the like.

In a preferred embodiment the light sensing device and/or the light detecting device comprises an avalanche photo diode, a photomultiplier tube, PIN photo diode, a single photon avalanche diode, and/or an array of any of the aforementioned.

Preferably, the light sensing device and/or the detecting device are adapted to detect light in the range of UV, near infrared, short/mean/long wavelength infrared, and/or sub-mm/THz band, preferably wideband visible, and near infrared or shortwave infrared.

Advantageously, the data processing unit uses machine learning techniques to process said data in a combined manner. The data processing unit can use deep learning and extended features, and be trained by machine learning techniques to perform field of view matching, image fusion, object recognition and/or verification to choose the region of interest. Field of view matching preferably comprises optical adjustments to perform an optical field of view matching, e.g., by zooming and/or electronics image matching. Also, the data processing unit can comprise a learning unit that uses the data acquired by the vision system itself, or external data, for example received by wireless networks, to train the above mentioned processing steps.

The invention solves the above object also by a corresponding vision method. Depending on the desired performance, such vision method involves either polarimetric, RGB, grayscale or some other imaging method.

In the following the invention shall be illustrated on the basis of preferred embodiments with reference to the accompanying drawings as non-limiting cases, wherein:
- Fig. 1: shows a schematic view of a vision system;
- Fig. 2: shows a vision system according to an embodiment of the invention; and
- Fig. 3: shows a grey-scale, depth, and fused representation of a scene.

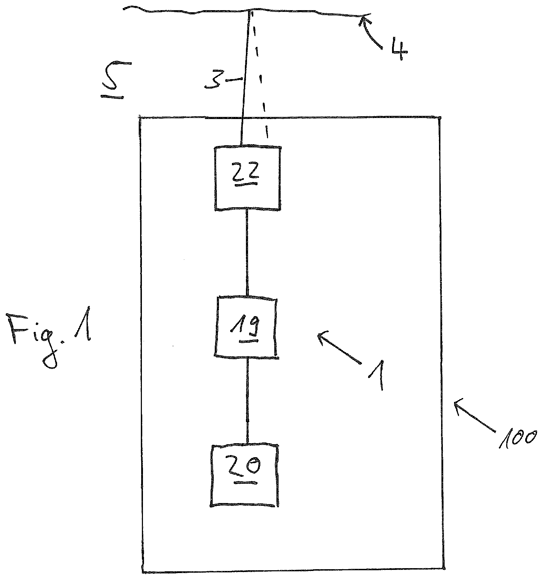

According to figure 1, the vision system 1 is mounted in/on a vehicle 100, to capture images of a scanned surface 4 in the environment 5 of the vehicle 100. The vision system 1 comprises an optical unit 22 and a data processing unit 19. The vision system 1 can further include other detection system and/or sensors such as radar or other cameras.

The optical system comprises a light source 2 that is adapted to emit a light beam 3, which is preferably directed by an optical system within the optical unit 22 and through a first lens system 10 towards the environment 5 of the vehicle 100. The light beam 3 eventually interacts with the environment 5, in particular the scanned surface 4 or dust, snow, rain, and/or fog in the environment 5, where the light beam 3 is reflected and a reflected portion of the light beam 3 enters the optical system 22, preferably through a second lens system 11. In addition to the reflected portion of the light beam 3, other light from the environment 5 enters the optical unit 22, preferably through the second lens system 11. All light entering the optical unit 22 is recorded by the optical unit 22 and the recorded image data is processed in a combined manner with data fusion by the data processing unit 19.

The driver assistance device 20 is able to trigger defined driver assistance action to assist the driver, e.g. braking, acceleration, steering, showing information etc., based on the data provided by the data processing unit 19. In the embodiment shown in figure 1, the vision system 1 comprises a single optical unit 22 mounted for example in the front part of a vehicle 1 and directed for example towards the front of the vehicle 1. Other positions in/on the vehicle are also possible, for example mounted at and/or directed towards the rear, the left, and/or the right. The vision system 1 can also comprise a plurality of optical units 22 that are mounted and/or directed for example towards the rear, the left, and/or the right. The viewing direction of the optical unit 22 is preferably variable. A plurality of optical units 22 allows covering a wide field of view, even up to 360° around the vehicle. A plurality of optical units 22 could communicate with separate data processing units 19, communicate with a single data processing unit 19, or work with a master-slave configuration. In particular, the images recorded from the environment 5 could be used for physical calibration of the plurality of the optical units 22 to cover a large field of view.

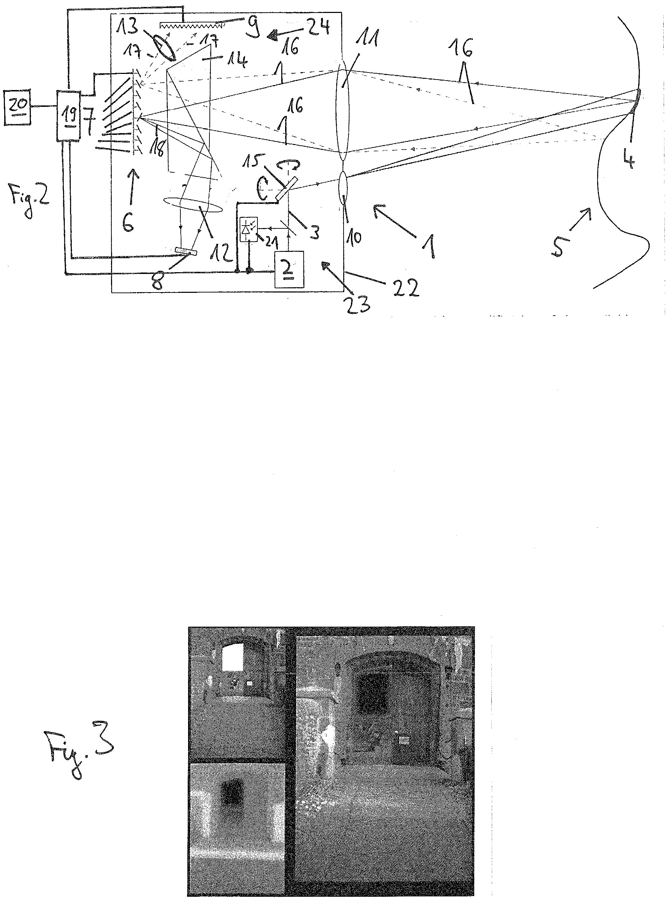

Figure 2 shows a vision system 1 in more detail. The light source 2 is arranged at an emitting side 23 and comprises a laser, including laser diodes, fiber lasers, etc., such that the vision system 1 is a LIDAR system. But also other embodiments of the light source 2 are possible, e.g. LEDs, or polarized light sources of different wavebands, adapted to correspond with the recording capabilities of a light detecting device 9 and a light sensing device 8 comprised in a receiving side 24 in the vision system's 1 optical unit 22. The use of a light source 2, or a plurality of light sources 2, corresponding to the sensing and detection capabilities of the vision system 1 could enable multi-specular methods, implementation of detection algorithms and/or road friction estimations. It is also possible to separate the emitting side 23 from the receiving side 24 and/or to arrange the emitting side 23 and the receiving side 24 in different units.

The light beam 3 emitted from the light source 2 is preferably divided or split, and a portion of the light beam is directed towards a sensor 21 to allow an accurate time-of-flight estimation. The sensor 21 is preferably in communication with the data processing unit 19 to schedule the time-of-flight measurement. Another portion of the light beam 3 can be deflected by a MEMS device 15, a mirror, and/or other optical component through, e.g., a first system of lenses 10, which may defocus, and thereby widen, the light beam 3, towards the scanned surface 4. The MEMS device 15, mirror, a group of mirrors, a prism arrangement such as Risley prisms, and/or other optical component is adapted to be controllable by and in communication with the data processing unit 19. The MEMS device 15 preferably is adapted to be rotatable around at least two axes and/or a plurality of MEMS devices 15 is adapted to rotate around at least one axis, allowing scanning of the environment 5 of the vehicle 100. For example a first MEMS device 15 could be arranged to perform the rotation around a first axis and a second MEMS device 15 could be arranged to perform a rotation around a second axis. By means of the MEMS device 15, the light beam 3 can be directed sequentially towards points or spots on the scanned surface 4.

A portion of the light beam 3 is reflected on the scanned surface 4 or by other reflectors and/or scatterers in the environment 5, and a reflected light beam portion 16 of the light beam 3 enters the optical unit 22, e.g., by passing a second lens system 11, alternatively an entrance window. The first lens system 10 and the second lens system 11 can coincide. The light beam portion 16 travelling through the optical unit 22 is preferably directed towards a prism 14 placed in the optical path of the light beam portion 16 within the optical unit 22, allowing for optical path division and/or light deflection.

The light beam portion 16 is directed towards a light deflection device 6 comprising a plurality of light deflection elements 7, each of which is adapted to deflect the light beam portion 16 and to change the direction of the redirected light between at least a first deflection direction as a first light beam portion 18 and a second deflection direction as a second light beam portion 17. The first light beam portion 18 preferably is deflected via the prism 14, and is directed towards the light sensing device 8 preferably through a third lens system 12. The second light beam portion 17 is directed towards the detecting device 9 preferably via a fourth lens system 13. The first light beam portion 18 is directed to, and incident on, the light sensing device 8. The second light beam portion 17 is directed to, and incident on, the detecting device 9.

Preferably, the light deflection device 6 is a DMD, i.e., a digital micro mirror device. The deflection device 6 is in communication with the data processing unit 19. The data processing unit 19 is adapted to control the deflection elements 7. Alternatives for the deflection device 6 to the DMD may be other active optical elements, in particular pixelated arrays (such as LCDs) or even deformable mirrors.

The detecting device 9 can comprise CCD/CMOS, focal plane arrays or polarimeters or any other area or line imaging sensor composed thereof. CCD/CMOS images may be RGB or grayscale depending on the embodiment. Polarimetric images can be in a convenient format obtained after sensing and computational analysis, which could be performed in the data processing unit 19 and/or a suitable processing device comprised in the detection device 9. Also polarization filters can be located in the optical path within the vision system, preferably in combination with a laser as light source 2 and/or a polarimeter as detecting device 9. The detecting device 9 can in particular comprise different sensors to detect different properties, e.g., different polarizations and/or different spectral bands.

Also a detecting device 9 with varying polarizing filters on different areas (pixels) of the detecting device 9 is possible.

Additional optics either for laser spot filtering and/or for optimization of focusing on the detecting device 9 is possible. Electronics comprised in the deflection device 6, the light sensing device 8 and/or the light detecting device 9 could be coordinated or controlled by the data processing unit 19. The communication between the light sensing device 8 and the data processing unit 19 can also be parallel to the communication between the detecting device 9 and the data processing unit 19.

The data processing unit 19 can comprise a pre-processor adapted to control the capture of images, time-of-flight measurements, and/or other data by the light sensing device 8 and the detecting device 9 and the control of the deflection device 6, receive the electrical signal containing the information from the light sensing device 8 and the detecting device 9 and from the light deflection device 6. The pre-processor may be realized by a dedicated hardware circuit, for example a Field Programmable Gate Array (FPGA) or an Application Specific Integrated Circuit (ASIC). Alternatively the pre-processor, or part of its functions, can be realized in the data processing unit 19 or a System-On-Chip (SoC) device comprising, for example, FPGA, processing device, ARM and/or microprocessor functionality.

Further image and data processing is carried out by corresponding software in the data processing unit 19. The image and data processing in the processing unit 19 may for example comprise identifying and preferably also classifying possible objects in the surrounding of the vehicle, such as pedestrians, other vehicles, bicyclists and/or large animals, tracking over time the position of object candidates identified in the captured images, computing depth images based on the time-of-flight values, and activating or controlling at least one driver assistance device 20 for example depending on an estimation performed with respect to a tracked object, for example an estimated collision probability. The driver assistance device 20 may in particular comprise a display device to display information on a possibly detected object and/or on the environment of the vehicle. However, the invention is not limited to a display device. The driver assistance device 20 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing unit 19 can also be used as input to highly automated, piloted, and/or autonomous driving functions in a vehicle.

The data processing unit 19 is preferably a digital device which is programmed or programmable and preferably comprises a microprocessor, micro-controller, digital signal processor (processing device), field programmable gate array (FPGA), or a System-On-Chip (SoC) device, and preferably has access to, or comprises, a memory device. The data processing unit 19, pre-processing device and the memory device are preferably realised in an on-board electronic control unit (ECU) and may be connected to other components of the vision system 1 via a separate cable or a vehicle data bus. In another embodiment the ECU and one or more of the vision systems 1 can be integrated into a single unit, where a one box solution including the ECU and all vision systems 1 can be preferred. All steps from data acquisition, imaging, depth estimations, pre-processing, processing to possible activation or control of driver assistance device are performed automatically and continuously during driving in real time.

Figure 3 shows a grey-scale image which could be obtained by the light detecting device 9 (top left), a depth image which could be obtained by the light sensing device 8 (bottom left), and a fused image (right), where the grey-scale image and the depth image have been fused to a single image comprising more information than the single images on the left of Figure 3. The grey-scale image could be recorded with the CCD/CMOS detecting device 9. The depth image could be recorded with the LIDAR light sensing device 8. The fused image could be the result of data fusion in the data processing unit 19. The greyscale image has a larger resolution than the depth image. Both grey-scale and depth image are processed, e.g., by interpolation and/or superposition, and a field of view matching can be performed to overlay the figures and achieve the fused image.

## Claims

1. A lidar vision system (1) for a vehicle (100) comprising
- a light source (2) comprising a laser arranged on an emitting side (23), adapted to emit a light beam (3) to a scanned surface (4) in the environment (5) of the vehicle (100) ;
- an optical component (15) adapted to deflect a portion of the light beam (3) through a first lens system (10) towards the scanned surface (4) and to scan the environment (5);
- at least one light deflection device (6) arranged on a receiving side (24), comprising an array of light deflection elements (7), wherein each light deflection element (7) is adapted to redirect light which is incident on said light deflection element (7) from the scanned surface (4), and to change the direction of the redirected light between at least a first deflection direction and a second deflection direction;
- a lidar light sensing device (8) arranged on the receiving side (24) to sense light redirected from the light deflection device (6) in said first deflection direction;
- a data processing unit (19);
wherein the light source (2), the lidar light sensing device (8), and the data processing unit (19) form a LIDAR system adapted to measure time-of-flight values,
wherein said data processing unit (19) is adapted to compute depth images based on the time-of-flight values, such that a depth image is recorded with the LIDAR light sensing device (8),
**characterized in that**
- said vision system (1) comprises a detecting device (9) arranged on the receiving side (24) to sense light redirected from the light deflection device (7) in the second deflection direction;
- the data processing unit (19) is adapted to process the data provided by said lidar light sensing device (8) and by said detecting device (9) in a combined manner;
the detecting device (9) is adapted to deliver information to the data processing unit (19) that is complementary to the data by the lidar light sensing device (8), namely, RGB, greyscale or polarimetric images, such that the lidar light sensing device (8) and the detecting device (9) record complementary data from the vehicle's (100) environment (5), wherein the complementary data are combined to a fused image by data fusion in the data processing unit (19).

2. The lidar vision system (1) according to claim 1, **characterized in that** the vision system (1) is adapted to choose a region of interest within the vehicle's (100) environment (5), wherein the resolution of the measurement of the time-of-flight values is increased.

3. The lidar vision system (1) as claimed in any one of the preceding claims, **characterized in that** the data processing unit (19) is adapted to perform field of view matching mechanisms based on said data.

4. The lidar vision system (1) according to any one of the preceding claims, **characterized in that** the data processing unit (19) is adapted to perform superposition and/or interpolation of the data provided by the lidar light sensing device (8) and by the detecting device (9).

5. The lidar vision system (1) according to any one of the preceding claims, **characterized in that** the data processing unit (19) is adapted to control the deflection device (6) on the basis of information from the detecting device (9) and/or the lidar light sensing device (8).

6. The lidar vision system (1) according to any one of the preceding claims, **characterized in that** depth images are sampled with at least 10 frames per second and/or RGB/polarimetric/FPA or other types of images are sampled with at least 10 frames per second.

7. The lidar vision system (1) according to any one of the preceding claims, **characterized in that** the detecting device (9) comprises a plurality of detecting sections or elements adapted to measure different properties of incident light.

8. The lidar vision system (1) as claimed in claim 7, **characterized in that** the detecting sections or elements are adapted to acquire image data in different spectral bands and/or with different imaging techniques.

9. The lidar vision system (1) according to any one of the preceding claims, **characterized in that** the vision system (1) is adapted to perform polarimetric imaging.

10. The lidar vision system (1) according to any one of the preceding claims, **characterized in that** the lidar light sensing device (8) and/or the light detecting device (9) comprises avalanche photo diodes, photomultiplier tubes, single photon avalanche diodes, or an array of any of the aforementioned.

11. The lidar vision system (1) according to any one of the preceding claims, characterized the lidar light sensing device (8) and/or the detecting device (9) are adapted to detect light in the range of UV, near infrared, short/mean/long wavelength infrared, and/or sub-mm/THz band, preferably wideband visible, and near infrared or short wavelength infrared.

12. The lidar vision system (1) according to any one of the preceding claims, **characterized in that** the data processing unit (19) uses machine learning techniques to process said data in a combined manner.

13. A lidar vision method for a vehicle (100) comprising
- emitting a light beam from a light source (2) comprising a laser arranged on an emitting side (23) to a scanned surface (4) in the environment (5) of the vehicle (100) ;
- deflecting a portion of the light beam (3) through a first lens system (10) towards the scanned surface (4) by an optical component (15) for scanning the environment (5);
- deflecting light incident on a light deflection element (7) comprised in a light deflection device (6) arranged on a receiving side (24), wherein each light deflection element (7) redirects said incident light from the scanned surface, and changes the direction of the redirected light between at least a first deflection direction and a second deflection direction;
- sensing light redirected from the light deflection device (6) in said first deflection direction with a lidar light sensing device (8);
wherein the light source (2), the lidar light sensing device (8), and a data processing unit (19) form a LIDAR system adapted to measure time-of-flight values,
wherein said data processing unit (19) computes depth images based on the time-of-flight values, such that a depth image is recorded with the LIDAR light sensing device (8), **characterized in that**
- said light redirected from the light deflection device (6) in the second deflection direction is sensed by an detecting device (9);
- a data processing unit (19) processes the data provided by said lidar light sensing device (8) and by said detecting device (9) in a combined manner,
the detecting device (9) delivers information to the data processing unit (19) that is complementary to the data by the lidar light sensing device (8), namely, RGB, greyscale or polarimetric images, such that the lidar light sensing device (8) and the detecting device (9) record complementary data from the vehicle's (100) environment (5), wherein the complementary data are combined to a fused image by data fusion in the data processing unit (19).

## Patentansprüche

1. Ein Lidar-Sichtsystem (1) für ein Fahrzeug (100) umfassend
- eine Lichtquelle (2), die einen auf einer Emissionsseite (23) angeordneten Laser umfasst, der dazu eingerichtet ist, einen Lichtstrahl (3) auf eine gescannte Oberfläche (4) in der Umgebung (5) des Fahrzeugs (100) zu emittieren;
- eine optische Komponente (15), die dazu eingerichtet ist, einen Teil des Lichtstrahls (3) durch ein erstes Linsensystem (10) in Richtung der gescannten Oberfläche (4) abzulenken und die Umgebung (5) zu scannen;
- mindestens eine Lichtablenkungsvorrichtung (6), die auf einer Empfangsseite (24) angeordnet ist und ein Feld von Lichtablenkungselementen (7) umfasst, wobei jedes Lichtablenkungselement (7) dazu eingerichtet ist, Licht, das von der gescannten Oberfläche (4) auf das Lichtablenkungselement (7) einfällt, umzulenken und die Richtung des umgelenkten Lichts zwischen mindestens einer ersten Ablenkungsrichtung und einer zweiten Ablenkungsrichtung zu ändern;
- eine Lidar-Lichterfassungsvorrichtung (8), die auf der Empfangsseite (24) angeordnet ist, um von der Lichtablenkungsvorrichtung (6) in die erste Ablenkungsrichtung umgelenktes Licht zu erfassen;
- eine Datenverarbeitungseinheit (19);
wobei die Lichtquelle (2), die Lidar-Lichterfassungsvorrichtung (8) und die Datenverarbeitungseinheit (19) ein LIDAR-System bilden, das zur Messung von Laufzeitwerten eingerichtet ist,
wobei die Datenverarbeitungseinheit (19) dazu eingerichtet ist, Tiefenbilder auf der Grundlage der Laufzeitwerte zu berechnen, so dass ein Tiefenbild mit der LIDAR-Lichterfassungsvorrichtung (8) aufgezeichnet wird, **dadurch gekennzeichnet, dass**
- das Sichtsystem (1) eine Detektionsvorrichtung (9) umfasst, die auf der Empfangsseite (24) angeordnet ist, um von der Lichtablenkungsvorrichtung (7) in die zweite Ablenkungsrichtung umgelenktes Licht zu erfassen;
- die Datenverarbeitungseinheit (19) dazu eingerichtet ist, die von der Lidar-Lichterfassungsvorrichtung (8) und von der Detektionsvorrichtung (9) bereitgestellten Daten in kombinierter Weise zu verarbeiten;
die Detektionsvorrichtung (9) dazu eingerichtet ist, Informationen an die Datenverarbeitungseinheit (19) zu liefern, die komplementär zu den Daten der Lidar-Lichterfassungsvorrichtung (8) sind, nämlich RGB-, Graustufen- oder polarimetrische Bilder, so dass die Lidar-Lichterfassungsvorrichtung (8) und die Detektionsvorrichtung (9) komplementäre Daten aus der Umgebung (5) des Fahrzeugs (100) aufzeichnen, wobei die komplementären Daten durch Datenfusion in der Datenverarbeitungseinheit (19) zu einem fusionierten Bild kombiniert werden.

2. Das Lidar-Sichtsystem (1) nach Anspruch 1, **dadurch gekennzeichnet, dass** das Sichtsystem (1) dazu eingerichtet ist, einen Bereich von Interesse innerhalb der Umgebung (5) des Fahrzeugs (100) auszuwählen, wobei die Auflösung der Messung der Laufzeitwerte erhöht wird.

3. Das Lidar-Sichtsystem (1) nach einem der vorangehenden Ansprüche, **dadurch gekennzeichnet, dass** die Datenverarbeitungseinheit (19) dazu eingerichtet ist, basierend auf den Daten Sichtfeldabgleichsmechanismen durchzuführen.

4. Das Lidar-Sichtsystem (1) nach einem der vorangehenden Ansprüche, **dadurch gekennzeichnet, dass** die Datenverarbeitungseinheit (19) dazu eingerichtet ist, eine Überlagerung und/oder Interpolation der von der Lidar-Lichterfassungsvorrichtung (8) und von der Detektionsvorrichtung (9) gelieferten Daten durchzuführen.

5. Das Lidar-Sichtsystem (1) nach einem der vorangehenden Ansprüche, **dadurch gekennzeichnet, dass** die Datenverarbeitungseinheit (19) dazu eingerichtet ist, die Ablenkungsvorrichtung (6) auf der Grundlage von Informationen von der Detektionsvorrichtung (9) und/oder der Lidar-Lichterfassungsvorrichtung (8) zu steuern.

6. Das Lidar-Sichtsystem (1) nach einem der vorangehenden Ansprüche, **dadurch gekennzeichnet, dass** Tiefenbilder mit mindestens 10 Bildern pro Sekunde gesampelt und/oder RGB/polarimetrische/FPA- oder andere Arten von Bildern mit mindestens 10 Bildern pro Sekunde gesampelt werden.

7. Das Lidar-Sichtsystem (1) nach einem der vorangehenden Ansprüche, **dadurch gekennzeichnet, dass** die Detektionsvorrichtung (9) eine Vielzahl von Detektionsabschnitten oder -elementen umfasst, die dazu eingerichtet sind, verschiedene Eigenschaften des einfallenden Lichts zu messen.

8. Das Lidar-Sichtsystem (1) nach Anspruch 7, **dadurch gekennzeichnet, dass** die Detektionsabschnitte oder -elemente dazu eingerichtet sind, Bilddaten in verschiedenen Spektralbereichen und/oder mit verschiedenen Aufnahmetechniken zu erfassen.

9. Das Lidar-Sichtsystem (1) nach einem der vorangehenden Ansprüche, **dadurch gekennzeichnet, dass** das Sichtsystem (1) dazu eingerichtet ist, eine polarimetrische Aufnahme durchzuführen.

10. Das Lidar-Sichtsystem (1) nach einem der vorangehenden Ansprüche, **dadurch gekennzeichnet, dass** die Lidar-Lichterfassungsvorrichtung (8) und/oder die Lichtdetektionsvorrichtung (9) Avalanche-Photodioden, Photomultiplier-Röhren, Einzelphotonen-Avalanche-Dioden oder ein Feld aus einem der vorgenannten Elemente umfasst.

11. Das Lidar-Sichtsystem (1) nach einem der vorangehenden Ansprüche, **dadurch gekennzeichnet, dass** die Lidar-Lichterfassungsvorrichtung (8) und/oder die Lichtdetektionsvorrichtung (9) dazu eingerichtet sind, Licht im Bereich des UV, des nahen Infrarots, des kurzwelligen/mittleren/langwelligen Infrarots und/oder des sub-mm/THz-Bands, vorzugsweise des sichtbaren Breitbands und des nahen Infrarots oder des kurzwelligen Infrarots, zu detektieren.

12. Das Lidar-Sichtsystem (1) nach einem der vorangehenden Ansprüche, **dadurch gekennzeichnet, dass** die Datenverarbeitungseinheit (19) Maschinenlerntechniken verwendet, um die Daten in einer kombinierten Weise zu verarbeiten.

13. Ein Lidar-Sichtverfahren für eine Fahrzeug (100), umfassend
- Emittieren eines Lichtstrahls von einer Lichtquelle (2), die einen auf einer Emissionsseite (23) angeordneten Laser umfasst, auf eine gescannte Oberfläche (4) in der Umgebung (5) des Fahrzeugs (100);
- Ablenken eines Teils des Lichtstrahls (3) durch ein erstes Linsensystem (10) in Richtung der gescannten Oberfläche (4) durch eine optische Komponente (15) zum Scannen der Umgebung (5);
- Ablenken von auf ein Lichtablenkungselement (7) einfallendes Licht, das in einer Lichtablenkungsvorrichtung (6) umfasst ist, die auf einer Empfangsseite (24) angeordnet ist, wobei jedes Lichtablenkungselement (7) das einfallende Licht von der gescannten Oberfläche umlenkt und die Richtung des umgelenkten Lichts zwischen mindestens einer ersten Ablenkungsrichtung und einer zweiten Ablenkungsrichtung ändert;
- Erfassen von Licht, das von der Lichtablenkungsvorrichtung (6) in der ersten Ablenkungsrichtung umgelenkt wird, mit einer Lidar-Lichterfassungsvorrichtung (8);
wobei die Lichtquelle (2), die Lidar-Lichterfassungsvorrichtung (8) und eine Datenverarbeitungseinheit (19) ein LIDAR-System bilden, das zur Messung von Laufzeitwerten eingerichtet ist,
wobei die Datenverarbeitungseinheit (19) Tiefenbilder basierend auf den Laufzeitwerten berechnet, so dass ein Tiefenbild mit der LIDAR-Lichterfassungsvorrichtung (8) aufgezeichnet wird, **dadurch gekennzeichnet, dass**
- das von der Lichtablenkungsvorrichtung (6) in die zweite Ablenkungsrichtung umgelenkte Licht von einer Detektionsvorrichtung (9) erfasst wird;
- eine Datenverarbeitungseinheit (19) die von der Lidar-Lichterfassungsvorrichtung (8) und von der Detektionsvorrichtung (9) gelieferten Daten in kombinierter Weise verarbeitet, die Detektionsvorrichtung (9) Informationen an die Datenverarbeitungseinheit (19) liefert, die komplementär zu den Daten der Lidar-Lichterfassungsvorrichtung (8) sind, nämlich RGB-, Graustufen- oder polarimetrische Bilder, so dass die Lidar-Lichterfassungsvorrichtung (8) und die Detektionsvorrichtung (9) komplementäre Daten aus der Umgebung (5) des Fahrzeugs (100) aufnehmen, wobei die komplementären Daten durch Datenfusion in der Datenverarbeitungseinheit (19) zu einem fusionierten Bild kombiniert werden.

## Revendications

1. Un système de vision lidar (1) pour un véhicule (100) comprenant :
- une source de lumière (2) comprenant un laser agencé sur un côté émission (23), adapté pour émettre un faisceau de lumière (3) à une surface balayée (4) dans l'environnement (5) du véhicule (100) ;
- un composant optique (15) adapté pour défléchir une portion du faisceau de lumière (3) par le biais d'un premier système de lentille (10) vers la surface balayée (4) et pour balayer l'environnement (5) ;
- au moins un dispositif de déflexion de lumière (6) agencé sur un côté réception (24), comprenant un réseau d'éléments de déflexion de lumière (7), dans lequel chaque élément de déflexion de lumière (7) est adapté pour rediriger une lumière qui est incidente sur ledit élément de déflexion de lumière (7) depuis la surface balayée (4), et pour changer la direction de la lumière redirigée entre au moins une première direction de déflexion et une seconde direction de déflexion ;
- un dispositif de captage de lumière lidar (8) agencé sur le côté réception (24) pour capter une lumière redirigée depuis le dispositif de déflexion de lumière (6) dans ladite première direction de déflexion ;
- une unité de traitement de données (19) ;
dans lequel la source de lumière (2), le dispositif de captage de lumière lidar (8), et l'unité de traitement de données (19) forment un système LIDAR adapté pour mesurer des valeurs de temps de vol,
dans lequel ladite unité de traitement de données (19) est adaptée pour calculer des images de profondeur d'après les valeurs de temps de vol, de sorte qu'une image de profondeur soit enregistrée avec le dispositif de captage de lumière LIDAR (8), **caractérisé en ce que**
- ledit système de vision (1) comprend un dispositif de détection (9) agencé sur le côté réception (24) pour capter une lumière redirigée depuis le dispositif de déflexion de lumière (7) dans la seconde direction de déflexion ;
- l'unité de traitement de données (19) est adaptée pour traiter les données fournies par ledit dispositif de captage de lumière lidar (8) et par ledit dispositif de détection (9) de manière combinée ;
le dispositif de détection (9) est adapté pour délivrer des informations à l'unité de traitement de données (19) qui sont complémentaires des données par le dispositif de captage de lumière lidar (8), à savoir, des images RVB, à échelle de gris ou polarimétriques, de sorte que le dispositif de captage de lumière lidar (8) et le dispositif de détection (9) enregistrent des données complémentaires de l'environnement (5) du véhicule (100), dans lequel les données complémentaires sont combinées à une image fusionnée par une fusion de données dans l'unité de traitement de données (19).

2. Le système de vision lidar (1) selon la revendication 1, **caractérisé en ce que** le système de vision (1) est adapté pour choisir une région d'intérêt dans l'environnement (5) du véhicule (100), dans lequel la résolution de la mesure des valeurs de temps de vol est augmentée.

3. Le système de vision lidar (1) selon l'une quelconque des revendications précédentes, **caractérisé en ce que** l'unité de traitement de données (19) est adaptée pour réaliser des mécanismes de concordance de champ de vision d'après lesdites données.

4. Le système de vision lidar (1) selon l'une quelconque des revendications précédentes, **caractérisé en ce que** l'unité de traitement de données (19) est adaptée pour réaliser une superposition et/ou une interpolation des données fournies par le dispositif de captage de lumière lidar (8) et par le dispositif de détection (9).

5. Le système de vision lidar (1) selon l'une quelconque des revendications précédentes, **caractérisé en ce que** l'unité de traitement de données (19) est adaptée pour commander le dispositif de déflexion (6) sur la base d'informations provenant du dispositif de détection (9) et/ou du dispositif de captage de lumière lidar (8).

6. Le système de vision lidar (1) selon l'une quelconque des revendications précédentes, **caractérisé en ce que** des images de profondeur sont échantillonnées avec au moins 10 trames par seconde et/ou des images RVB/polarimétriques/FPA ou d'autres types d'images sont échantillonnés avec au moins 10 trames par seconde.

7. Le système de vision lidar (1) selon l'une quelconque des revendications précédentes, **caractérisé en ce que** le dispositif de détection (9) comprend une pluralité de sections ou d'éléments de détection adaptés pour mesurer des propriétés différentes de lumière incidente.

8. Le système de vision lidar (1) selon la revendication 7, **caractérisé en ce que** les sections ou éléments de détection sont adaptés pour acquérir des données d'image dans des bandes spectrales différentes et/ou avec des techniques d'imagerie différentes.

9. Le système de vision lidar (1) selon l'une quelconque des revendications précédentes, **caractérisé en ce que** le système de vision (1) est adapté pour réaliser une imagerie polarimétrique.

10. Le système de vision lidar (1) selon l'une quelconque des revendications précédentes, **caractérisé en ce que** le dispositif de captage de lumière lidar (8) et/ou le dispositif de détection de lumière (9) comprennent des photodiodes à avalanche, des tubes photomultiplicateurs, des diodes à avalanche à photon unique, ou un réseau de l'un quelconque des éléments mentionnés ci-dessus.

11. Le système de vision lidar (1) selon l'une quelconque des revendications précédentes, **caractérisé en ce que** le dispositif de captage de lumière lidar (8) et/ou le dispositif de détection (9) sont adaptés pour détecter une lumière dans la plage de l'UV, du proche infrarouge, de l'infrarouge à longueur d'onde courte/moyenne/longue, et/ou de la bande sub-mm/THz, de préférence du visible à large bande, et du proche infrarouge ou de l'infrarouge à longueur d'onde courte.

12. Le système de vision lidar (1) selon l'une quelconque des revendications précédentes, **caractérisé en ce que** l'unité de traitement de données (19) utilise des techniques d'apprentissage machine pour traiter lesdites données de manière combinée.

13. Un procédé de vision lidar pour un véhicule (100) comprenant :
- l'émission d'un faisceau de lumière depuis une source de lumière (2) comprenant un laser agencé sur un côté émission (23) à une surface balayée (4) dans l'environnement (5) du véhicule (100) ;
- la déflexion d'une portion du faisceau de lumière (3) par le biais d'un premier système de lentille (10) vers la surface balayée (4) par un composant optique (15) pour balayer l'environnement (5) ;
- la déflexion d'une lumière incidente sur un élément de déflexion de lumière (7) compris dans un dispositif de déflexion de lumière (6) agencé sur un côté réception (24), dans lequel chaque élément de déflexion de lumière (7) redirige ladite lumière incidente depuis la surface balayée, et change la direction de la lumière redirigée entre au moins une première direction de déflexion et une seconde direction de déflexion ;
- le captage d'une lumière redirigée depuis le dispositif de déflexion de lumière (6) dans ladite première direction de déflexion avec un dispositif de captage de lumière lidar (8) ;
dans lequel la source de lumière (2), le dispositif de captage de lumière lidar (8), et une unité de traitement de données (19) forment un système LIDAR adapté pour mesurer des valeurs de temps de vol,
dans lequel ladite unité de traitement de données (19) calcule des images de profondeur d'après les valeurs de temps de vol, de sorte qu'une image de profondeur soit enregistrée avec le dispositif de captage de lumière LIDAR (8), **caractérisé en ce que**
- ladite lumière redirigée depuis le dispositif de déflexion de lumière (6) dans la seconde direction de déflexion est captée par un dispositif de détection (9) ;
- une unité de traitement de données (19) traite les données fournies par ledit dispositif de captage de lumière lidar (8) et par ledit dispositif de détection (9) de manière combinée,
le dispositif de détection (9) délivre des informations à l'unité de traitement de données (19) qui sont complémentaires des données par le dispositif de captage de lumière lidar (8), à savoir, des images RVB, à échelle de gris ou polarimétriques, de sorte que le dispositif de captage de lumière lidar (8) et le dispositif de détection (9) enregistrent des données complémentaires de l'environnement (5) du véhicule (100), dans lequel les données complémentaires sont combinées à une image fusionnée par une fusion de données dans l'unité de traitement de données (19).
